# EUROPÄISCHE PATENTSCHRIFT

(11) **EP 2 651 837 B1**
(45) Veröffentlichungstag und Bekanntmachung des Hinweises auf die Patenterteilung: **24.01.2018**
(21) Anmeldenummer: 11802882.8
(22) Anmeldetag: 08.12.2011
(51) Int. Cl.: B60J 1/00, C03B 23/03, C03B 35/14, C03B 23/025, C03B 23/035, C03B 35/20

(54) **VERFAHREN UND VORRICHTUNG ZUM BIEGEN VON SCHEIBEN**
METHOD AND DEVICE FOR BENDING SHEETS
PROCÉDÉ ET DISPOSITIF DE CINTRAGE DE VITRES

(30) Priorität: 13.12.2010 EP 10194711
(43) Veröffentlichungstag der Anmeldung: 23.10.2013
(73) Patentinhaber: Saint-Gobain Glass France, 92400 Courbevoie (FR)
(72) Erfinder: BALDUIN, Michael, 52477 Alsdorf (DE); DUNKMANN, Benno, B-4000 Liège (BE); LE NY, Jean-Marie, B-4851 Gemmenich (BE); SCHMIDT, Lothar, 52074 Aachen (DE); RADERMACHER, Herbert, B-4730 Raeren (BE)
(74) Vertreter: Gebauer, Dieter Edmund
(86) Internationale Anmeldenummer: PCT/EP2011/072170
(87) Internationale Veröffentlichungsnummer: WO 2012/080072

(56) Entgegenhaltungen:
- EP-A1- 2 233 444
- DE-B3-102005 001 513
- DE-C1- 4 337 559
- US-A1- 2007 157 671
- US-A1- 2008 134 722

## Beschreibung

Die Erfindung betrifft ein Verfahren und eine Vorrichtung zum Biegen von Scheiben, einen Ofen zum Biegen von Scheiben und die Verwendung des Ofens.

Die Entwicklung neuer Kraftfahrzeuge wird neben Aspekten zur Ausstattung auch in großen Maßen von Designelementen bestimmt. Die Bedeutung des Windschutzscheibendesigns nimmt dabei aufgrund der großen, gut sichtbaren Fläche immer mehr zu. In dieser Hinsicht spielt nicht nur das Aussehen der Windschutzscheibe eine Rolle, sondern auch Aspekte zum Energiesparen und zur Umweltverträglichkeit. Leistungsfähige Mikroprozessoren sowie CAD (Computer-Aided Design) gestützte Softwarepakete ermöglichen zudem eine weitergehende Anpassung und Optimierung des Luftwiderstandes der Frontscheibe. Moderne Windschutzscheiben in Kraftfahrzeugen weisen aus diesem Grund zunehmend komplexere Formen auf. Insbesondere Fahrzeuge mit sehr niedrigem Spritverbrauch, aber auch Sportwagen stellen hohe Anforderungen an die Geometrie der Scheibe und somit auch an die zur Umsetzung notwendigen Verfahren zum Biegen von Scheiben. Die Biegung einer Glasscheibe lässt sich beispielsweise durch eine Kombination von Schwerkraftbiegung und Pressbiegung realisieren. Eine oder mehrere Glasscheiben werden in einen Biegering eingelegt und erwärmt. In diesem Prozess wird die Glasscheibe entlang der durch den Biegering vorgegebenen Geometrie mithilfe der auf die erwärmte Glasscheibe wirkenden Schwerkraft gebogen. Anschließend wird das erwärmte Glas mit Hilfe von Unterdruck und eines geeigneten Rahmens in die entsprechende Form gebogen.

Komplexere Geometrien lassen sich in der Regel nicht mit einem einzigen Biegeprozess realisieren. Erschwerend kommt hinzu, dass separate oder nachfolgende Biegeverfahren sich nicht beliebig kombinieren lassen. Diese Faktoren schränken die Möglichkeiten, zur angestrebten Scheibengeometrie zu gelangen, deutlich ein. Insbesondere die Kombination von Randbiegung und Flächenbiegung zur Erzeugung komplexer Geometrien lässt sich nur schwer realisieren.

EP 0 677 491 A2 offenbart ein Verfahren zum Biegen und Tempern von Glasscheiben. Die Glasscheiben werden bis auf ihre Erweichungstemperatur erwärmt, in einer Vorrichtung zwischen zwei komplementären Formen gepresst und anschließend in einen Transportring überführt. Die Scheiben werden anschließend im Transportring getempert und gekühlt.

EP 1 371 616 B1 offenbart eine Vorrichtung zum Biegen und Vorspannen von Glasscheiben. Die Vorrichtung umfasst unter anderem aufeinander folgende Formträger, Vorwärmsektionen zum Erhitzen von Glasscheiben auf Biegetemperatur, eine Schwerkraft basierende Vorbiegesektion, eine Biegesektion mit Pressform und eine Abkühlsektion.

EP 1 358 131 B1 offenbart ein Verfahren zum paarweisen Biegen von Glasscheiben. Das Glasscheibenpaar wird hierzu in horizontaler Lage auf einer Rahmenbiegeform durch Schwerkraftbiegen vorgebogen. Anschließend wird das vorgebogene Glasscheibenpaar mit einer vollflächigen Biegeform nachgebogen.

US 2008/0134722 A1 offenbart ein Verfahren und eine Vorrichtung zum Biegen von übereinanderliegenden Scheiben. Die Scheiben werden über eine Saugform angehoben und über eine gegenüberliegende Form gepresst und entsprechend der Geometrie gebogen.

Die Aufgabe der vorliegenden Erfindung liegt darin, ein Verfahren zum Biegen von Scheiben bereitzustellen, welches auch die Biegung komplexer Geometrien schnell in möglichst wenigen Verfahrensschritten und bei minimalem Energieeinsatz ermöglicht.

Die Aufgabe der Erfindung wird durch ein Verfahren und eine Vorrichtung nach den Ansprüchen 1 und 10 gelöst. Vorteilhafte Ausgestaltungen ergeben sich aus den abhängigen Ansprüchen.

Die Verwendung des erfindungsgemäßen Ofens geht aus Anspruch 15 hervor.

Das erfindungsgemäße Verfahren zum Biegen von Scheiben ermöglicht die Kombination einer Rand- sowie Flächenbiegung. Das Verfahren umfasst einem ersten Schritt, wobei mindestens eine Scheibe, bevorzugt eine erste Scheibe und eine zweite Scheibe, in einen Vorbiegering auf einen fahrbaren Biegeringhalter eingesetzt werden. Das Verfahren eignet sich sowohl für eine Scheibe als auch für das paarweise Biegen von Scheiben. Der Vorbiegering hat bevorzugt eine mittlere Randendbiegung von 5 % bis 50 %. Der fahrbare Biegeringhalter fährt anschließend in einen Ofen und die Scheiben werden im Vorbiegering über eine Heizvorrichtung mindestens auf die Erweichungstemperatur des Glases, bevorzugt 550 °C bis 800 °C erwärmt. Die Erweichungstemperatur richtet sich nach der Zusammensetzung des Glases. Die im Vorbiegering eingelegten Scheiben werden durch Einwirkung der Schwerkraft auf 5 % bis 50 % der lokalen Randendbiegung vorgebogen. Der Ausdruck "Randendbiegung" umfasst im Sinne der Erfindung die mittlere (End-)Biegung im endgültigen, fertigen Zustand von mindestens einem Teilstück des Scheibenrandes oder Biegeringrandes mit einer Ausdehnung oder Länge von mindestens 30 % des gesamten Biegering- oder Scheibenrandes. Die Scheiben werden im nächsten Schritt über eine (erste) Ansaugvorrichtung angehoben und über die im Vorbiegering erhaltene Biegung hinaus gebogen. Die Scheiben werden bevorzugt auf 102 % bis 130 % der Randendbiegung gebogen. Die Biegung erfolgt über ein in der Ansaugvorrichtung befindliches Gegenskelett. Das Gegenskelett weist bevorzugt die Form eines Ringes mit einer abstehenden, gebogenen Kontaktfläche auf. Die Ansaugvorrichtung enthält neben dem Gegenskelett eine das Gegenskelett umgebende Abdeckung mit einem Luftleitblech. Das Luftleitbleich befindet sich benachbart zur angehobenen Scheibe und ist so gestaltet, dass die Scheibe während der Biegung an der Kontaktfläche des Gegenskeletts einen Abstand von 3 mm bis 50 mm zu dem Luftleitblech aufweist. Dieser Abstand ermöglicht ein kontinuierliches Ansaugen von Luft im Zwischenraum zwischen der Scheibe und dem Luftleitblech. Die angesaugte Luft erzeugt einen Unterdruck zur Fixierung der Scheibe an der Kontaktfläche. Entsprechend der Biegung (Krümmung) der Kontaktfläche werden die Scheiben durch den Saugvorgang gebogen. Der Kontaktbereich des Formteils, insbesondere die Kontaktfläche mit der Scheibe, ist bevorzugt mit einem flexiblen oder weichen Material ausgekleidet. Dieses Material umfasst bevorzugt feuerfeste Fasern aus Glas, Metall oder Keramik und verhindert Beschädigungen wie Kratzer auf den Scheiben. Eine Beschreibung der Funktionsweise und des Aufbaus der Ansaugvorrichtung zum Anheben der Scheibe findet sich auch in der US 2008/0134722 A1, [0036] und [0038] bis [0040] sowie Anspruch 1 a). Die Scheiben werden anschließend über die Ansaugvorrichtung in einen Endbiegering auf dem fahrbaren Biegeringhalter abgelegt. Der Endbiegering hat bevorzugt mindestens eine 30 % größere mittlere Randendbiegung als der Vorbiegering. Das Ablegen der Scheiben kann beispielsweise durch Aufheben des Saugdruckes über eine Druckabsenkung in der Ansaugvorrichtung erfolgen. Der Vorbiegering und der Endbiegering sind jeweils entsprechend der beabsichtigten Scheibengeometrie gebogen. Der Umfang und der Öffnungswinkel des Biegerings richten sich nach der Geometrie der zu biegenden Scheibe. Der Vorbiegering und der Endbiegering sind bevorzugt auf dem gleichen fahrbaren Biegeringhalter angeordnet und lassen sich beispielsweise durch das Entfernen eines Stiftes oder Halterung vom Vorbiegering in den Endbiegering umstellen. Der Ausdruck "umstellen" umfasst im Sinne der Erfindung sowohl die Änderung der Form (Geometrie) des Biegerings vom Vorbiegering zum Endbiegering, als auch ein Abstreifen des Vorbiegerings sowie "Freiwerden" eines unter dem Vorbiegering angeordneten Endbiegerings. Die auf dem Endbiegering abgelegte Scheibe wird durch Wärmeeinstrahlung in der Fläche vorgebogen. Dazu wird oberhalb der Scheibe ein Temperaturgradient eingestellt und durch die unterschiedliche Erwärmung eine unterschiedliche Flächenbiegung ermöglicht. Die Heizvorrichtung umfasst bevorzugt eine Anordnung aus einzelnen separat steuerbaren Heizkacheln. Durch die unterschiedliche Wärmeabstrahlung der Kacheln lassen sich unterschiedliche Temperaturbereiche auf den Scheiben realisieren. Anschließend werden die Scheiben über eine zweite Ansaugvorrichtung angehoben. Die zweite Ansaugvorrichtung weist bevorzugt denselben Aufbau auf wie die erste Ansaugvorrichtung. Im nächsten Schritt werden die Scheiben gegen eine Gegenform gepresst und bevorzugt in der Fläche der Scheibe gebogen. Der Aufbau dieser Gegenform ist in der US2008/0134722 A1 in [0037] und Figur 2 beschrieben. Die Gegenform fungiert als Negativ der Flächebiegung der Scheibe und biegt die Scheibe in die abschließende Flächenendgeometrie. Anschließend werden die Scheiben auf dem Endbiegering abgelegt und abgekühlt.

Die Scheiben enthalten bevorzugt Glas, besonders bevorzugt Flachglas (Floatglas), Quarzglas, Borosilikatglas und/oder Kalk-Natron-Glas.

Die Scheiben werden bevorzugt über die Ansaugvorrichtung angehoben und auf 100 % bis 130 %, bevorzugt auf 105 % bis 120 % der gemittelten globalen Randendbiegung gebogen. Der Ausdruck "globale Randendbiegung" bezieht sich auf eine prozentual gleichmäßige Biegung der gesamten Scheibe. Die Scheiben werden bevorzugt an einen Biegering (Gegenskelett) in der Ansaugvorrichtung so geformt, dass sie eine Randbiegung aufweisen, die in Form oder Maß über den Betrag der Endrandbiegung hinausgeht.

Die Scheibe wird bevorzugt über die Ansaugvorrichtung mit einer lokal unterschiedlichen Randendbiegung gebogen. Der Ausdruck "lokale Randendbiegung" bezieht sich auf eine prozentual ungleichmäßige (Randend-)Biegung der gesamten Scheibe.

Die Scheibe wird bevorzugt in der ersten und/oder zweiten Ansaugvorrichtung lokal über einen Luftstrom oder einen unteren Biegering gebogen. Der Ausdruck "lokal" meint einzelne Bereiche der Scheibe, denen über einen Luftstrom, bevorzugt aus einer Düse, in einem begrenzten Bereich eine zusätzliche Biegung eingestellt wird. Alternativ kann die beschriebene lokale Biegung auch über einen von unten angelegten Biegering erfolgen.

Die Scheiben werden bevorzugt über einen Temperaturgradienten auf der Glasoberfläche mit maximal 0,05 K/mm bis 0,5 K/mm, bevorzugt 0,1 K/mm bis 0,2 K/mm erwärmt. Die Einstellung des Temperaturgradienten erfolgt bevorzugt über unterschiedlich gesteuerte (d.h. unterschiedliche abgestrahlte Wärmemengen) und über oder unter den Scheiben platzierte Heizvorrichtungen.

Die Scheiben werden bevorzugt auf eine Temperatur von 500 °C bis 750 °C, besonders bevorzugt 580 °C bis 650 °C erwärmt.

Die Scheiben werden bevorzugt durch die Schwerkraft im Vorbiegering auf 10 % bis 30 % der gemittelten Endbiegung vorgebogen.

Die Ansaugvorrichtung baut bevorzugt einen Ansaugdruck von 1 kg/m² bis 100 kg/m² auf. Dieser Ansaugdruck ist ausreichend, um die Scheiben an der Ansaugvorrichtung sicher zu fixieren und über das Gegenskelett zu biegen.

Die Erfindung umfasst des Weiteren einen Ofen zur Biegung von Scheiben, bevorzugt zum paarweisen Biegen von Scheiben. Der Ofen umfasst mindestens eine im Ofen angebrachte Heizvorrichtung und einen innerhalb und außerhalb des Ofens fahrbaren Biegeringhalter mit einem Biegering als Vorbiegering und/oder Endbiegering. Der Biegering ist bevorzugt sowohl als Vorbiegering als auch Endbiegering einstellbar oder umstellbar. Der Vorbiegering und der Endbiegering lassen sich beispielsweise durch das Entfernen eines Stiftes oder einer Halterung vom Vorbiegering in den Endbiegering umstellen. Der Ausdruck "umstellen" umfasst im Sinne der Erfindung sowohl die Änderung der Form (Geometrie) des Biegerings vom Vorbiegering zum Endbiegering als auch ein Abstreifen des Vorbiegerings sowie "Freiwerden" eines unter dem Vorbiegering angeordneten Endbiegerings. Innerhalb eines Vorwärmbereiches werden die Scheiben (erste Scheibe und/oder die zweite Scheibe) auf Erweichungstemperatur erwärmt. Dem Vorwärmbereich schließt sich im ersten Biegebereich eine erste, vertikal verstellbare, bevorzugt konvex gebogene Ansaugvorrichtung im Vorbiegebereich an. Die Ansaugvorrichtung ermöglicht eine Aufnahme der Scheiben aus dem Vorbiegering, ein Biegen der Scheibe und Rückplatzieren der vorgebogenen Scheibe auf dem Endbiegering. Die Ansaugvorrichtung umfasst mindestens ein Gegenskelett mit einer gebogenen Kontaktfläche. Die Biegung der Kontaktfläche ist bevorzugt größer als die Biegung des Vorbiegerings, bevorzugt beträgt die Biegung der Kontaktfläche mindestens 30 %, besonders bevorzugt mindestens 90 %. Das Gegenskelett ist von einer Abdeckung mit Luftleitblech umgeben und die Kontaktfläche weist einen minimalen Abstand von 3 mm bis 50 mm zu dem Luftleitblech auf. Das Luftleitblech überragt den tiefsten Punkt der gebogenen Kontaktfläche in Richtung des Bodens. An die Ansaugvorrichtung schließt sich ein Heizbereich zum Heizen oder Tempern der auf dem fahrbaren Biegering befindlichen Scheiben an. Die auf dem Endbiegering abgelegte Scheibe wird durch Wärmeeinstrahlung in der Fläche vorgebogen. Dazu wird oberhalb der Scheibe im Heizbereich ein Temperaturgradient eingestellt und durch die unterschiedliche Erwärmung eine unterschiedliche Flächenbiegung ermöglicht. Die Heizvorrichtung umfasst bevorzugt eine Anordnung aus einzelnen, separat steuerbaren Heizkacheln. Durch die unterschiedliche Wärmeabstrahlung der Kacheln lassen sich unterschiedliche Temperaturbereiche auf den Scheiben realisieren. Benachbart zum Heizbereich befindet sich in Laufrichtung der Scheiben ein zweiter Biegebereich. Der zweite Biegebereich umfasst eine zweite, vertikal verstellbare Ansaugvorrichtung sowie eine horizontal und vertikal verstellbare, bevorzugt konkav, gebogene Gegenform. Die Gegenform ermöglicht in Verbindung mit der zweiten Ansaugvorrichtung eine Flächenbiegung der Scheibe. Der Aufbau dieser Gegenform ist in der US2008/0134722 A1 in [0037] und Figur 2 beschrieben. Dem zweiten Biegebereich schließt sich in Verfahrensrichtung ein Kühlbereich an. Der Kühlbereich bildet den abschließenden Teil des erfindungsgemäßen Ofens. Der Vorwärmbereich, erste Biegebereich, Heizbereich, zweiter Biegebereich und der Kühlbereich sind verbunden in Verfahrensrichtung nacheinander angeordnet. Der erfindungsgemäße Ofen weist Heizvorrichtungen zum Beheizen der Bereiche Vorwärmbereich, erste Biegebereich, Heizbereich, zweiter Biegebereich, Kühlbereich auf. Die Heizvorrichtungen können sowohl unterhalb, neben als auch oberhalb der fahrbaren Biegeringhalter angeordnet sein.

Der fahrbare Biegeringhalter wird bevorzugt über eine innerhalb und außerhalb des Ofens befindliche Transportvorrichtung bewegt.

Im zweiten Biegebereich ist bevorzugt eine dritte Ansaugvorrichtung angeordnet. Dies erhöht die Taktzeit des erfindungsgemäßen Ofens.

Die Heizvorrichtung umfasst bevorzugt Heizstrahler, besonders bevorzugt Infrarotstrahler.

Die Heizvorrichtung umfasst bevorzugt eine Anordnung aus einzelnen separat steuerbaren Heizkacheln. Durch die unterschiedliche Wärmeabstrahlung der Kacheln lassen sich unterschiedliche Temperaturbereiche auf den Scheiben realisieren. Die unterschiedlichen Temperaturbereiche ermöglichen eine graduelle Erwärmung der Scheibenoberfläche.

Die Erfindung umfasst des Weiteren die Verwendung des erfindungsgemäßen Ofens zur Biegung von zu laminierenden Scheiben, bevorzugt Fahrzeugwindschutzscheiben.

Die Erfindung umfasst des Weiteren die Verwendung einer erfindungsgemäßen Scheibe als Windschutzscheibe, bevorzugt als Windschutzscheibe eines Kraftfahrzeuges.

Im Folgenden wird die Erfindung anhand von Zeichnungen und eines Ausführungssowie Vergleichsbeispiels näher erläutert. Die Zeichnungen sind rein schematische Darstellungen und nicht maßstabsgetreu. Sie schränken die Erfindung in keiner Weise ein.

Es zeigen:
Figur 1 einen Querschnitt des erfindungsgemäßen Ofens
Figur 2 einen Querschnitt der Ansaugvorrichtung und
Figur 3 ein Fließschema des erfindungsgemäßen Verfahrens.

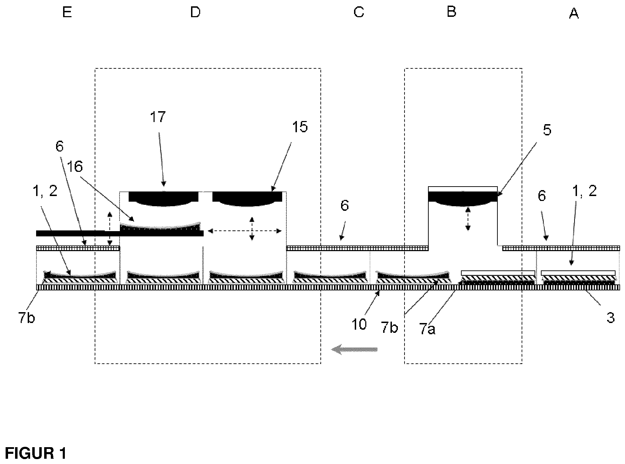

Figur 1 zeigt einen Querschnitt des erfindungsgemäßen Ofens. Der Ofen umfasst Heizvorrichtungen (6) und innerhalb und außerhalb des Ofens über eine Transportvorrichtung (10) fahrbare Biegeringhalter (3) mit jeweils einem Vorbiegering (7a). Innerhalb eines Vorwärmbereiches (A) werden die Scheiben (1, 2) auf Erweichungstemperatur des jeweiligen Glases erwärmt. Dem Vorwärmbereich (A) schließt sich im Vorbiegebereich (B) eine erste, vertikal höhenverstellbare, bevorzugt konvex gebogene Ansaugvorrichtung (5) an. Die Ansaugvorrichtung (5) ermöglicht eine Aufnahme der Scheiben (1, 2) aus dem Biegering (3), ein Vorbiegen der Scheiben (1, 2) und Ablegen der vorgebogenen Scheiben (1, 2) auf einem Endbiegering (7b). Der Vorbiegering (7a) und der Endbiegering (7b) lassen sich beispielsweise durch das Entfernen eines Stiftes oder einer Halterung vom Vorbiegering (7a) in den Endbiegering (7b) umstellen. An die Ansaugvorrichtung (5) im Vorbiegebereich (B) schließt sich ein Zwischenbereich (C) zum Heizen der auf dem Endbiegering (7b) abgelegten Scheiben (1, 2) an. Benachbart zum Zwischenbereich (C) befinden sich der Endbiegebereich (D) mit einer zweiten vertikal verstellbaren, konvex gebogenen Ansaugvorrichtung (15). Die zweite vertikal verstellbare, konvex gebogene Ansaugvorrichtung (15) ist horizontal beweglich und ermöglicht ein Anheben und Biegen der Scheiben (1, 2). Die zweite vertikal verstellbare, konvex gebogene Ansaugvorrichtung (15) entspricht in ihrem grundsätzlichen Aufbau der Ansaugvorrichtung (5). Der grundsätzliche Aufbau der Ansaugvorrichtung (5, 15) ist auch in der US2008/0134722 A1 beschrieben. Über eine horizontal und vertikal verstellbare konkav gebogene Gegenform (16) lässt sich in den über die konvex gebogene Ansaugvorrichtung (15) aufgenommen Scheiben (1, 2) die entsprechende Endbiegung erzeugen. Die Scheiben (1, 2) werden zwischen der konvex gebogenen Ansaugvorrichtung (15) und der konkav gebogenen Gegenform (16) gepresst. Zur Erhöhung der Taktfrequenz kann neben der konvex gebogenen Ansaugvorrichtung (15) noch eine weitere, dritte Ansaugvorrichtung (17) angebracht sein. Die dritte Ansaugvorrichtung (17) kann Scheiben aufnehmen, während in der zweiten Ansaugvorrichtung Scheiben gebogen werden. Nach Abschluss des Press- oder Biegevorgangs lassen sich die Scheiben (1, 2) über die konvex gebogene Ansaugvorrichtung (9) wieder auf dem Endbiegering (7b) ablegen. Ein Kühlbereich (D) bildet den abschließenden Teil des erfindungsgemäßen Ofens. Der Vorwärmbereich (A), der Vorbiegebereich (B) der Zwischenbereich (C), der Endbiegebereich (D) und der Kühlbereich (D) sind nacheinander verbunden angeordnet.

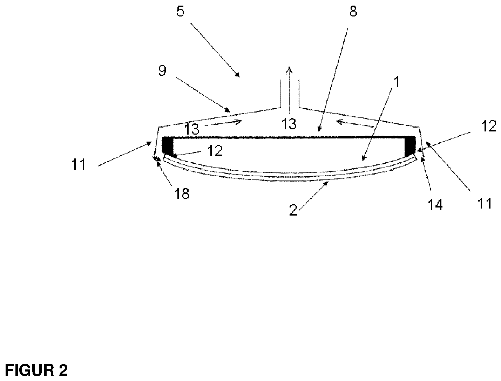

Figur 2 zeigt einen Querschnitt der Ansaugvorrichtung (5). Die Ansaugvorrichtung (5) enthält ein Gegenskelett (8) und eine das Gegenskelett (8) umgebende Abdeckung (9). Das Gegenskelett (8) kann im Bezug auf den nicht gezeigten Endbiegering (7b) global oder lokal überbogen sein. Das Gegenskelett wirkt auch als "Negativform" zum nicht gezeigten Endbiegering (7b). Über die Randzone (14) zwischen Gegenskelett (8) und Abdeckung (9) wird ein Luftstrom (13) in die Ansaugvorrichtung (5) angesaugt. Mit Hilfe des daraus resultierenden Unterdrucks werden die Scheiben (1, 2) angesaugt, angehoben und gebogen. Die Kontaktfläche (12) des Gegenskeletts (8) mit der zweiten Scheibe (2) ist bevorzugt mit einem flexiblen oder weichen Material wie feuerfesten Fasern aus Glas, Metall oder Keramik ausgekleidet.

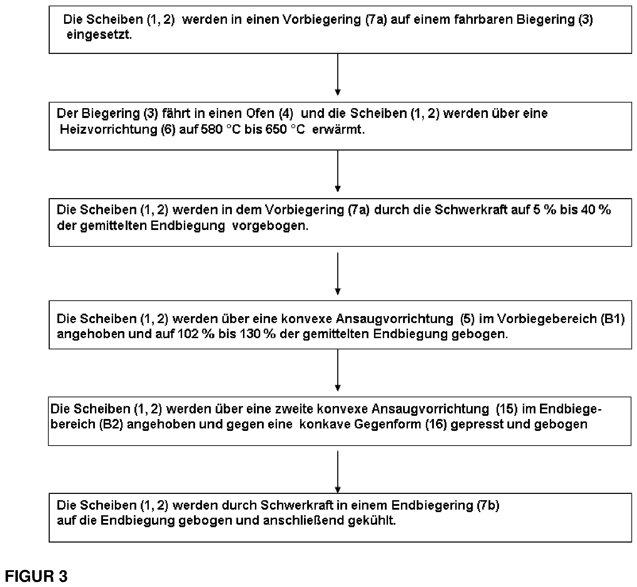

Figur 3 zeigt ein Fließschema des erfindungsgemäßen Verfahrens. Es werden zwei Scheiben (1, 2) in einen Vorbiegering (7a) auf einen fahrbaren Biegering (3) eingesetzt. Der Biegering (3) wird anschließend in einen Ofen gefahren. Die Scheiben (1, 2) werden über eine Heizvorrichtung (6) aus Strahlungsheizkörpern auf die Erweichungstemperatur der Scheiben (1, 2), etwa 580 °C bis 650 °C erwärmt. Im Zuge der Erwärmung der Scheiben (1, 2) werden die im Vorbiegering (7a) befindlichen Scheiben (1, 2) mithilfe der Schwerkraft auf 5 % bis 40 % der gemittelten, zu erreichenden Endbiegung vorgebogen. Die Heizvorrichtung umfasst bevorzugt eine Anordnung aus einzelnen separat steuerbaren Heizkacheln. Durch die unterschiedliche Wärmeabstrahlung der Kacheln lassen sich unterschiedliche Temperaturbereiche auf den Scheiben (1, 2) realisieren. Die unterschiedlichen Temperaturbereiche ermöglichen eine graduelle Erwärmung der Scheibenoberfläche. Die Scheiben (1, 2) werden anschließend über eine bevorzugt konvexe Ansaugvorrichtung (5) angehoben und auf 102 % bis 130 % der gemittelten Endbiegung gebogen. In einem nächsten Schritt werden die Scheiben (1, 2) über die konvexe Ansaugvorrichtung (5) auf dem Endbiegering (7b) auf dem fahrbaren Biegering (3) abgelegt. Der Vorbiegering (7a) und der Endbiegering (7b) sind jeweils entsprechend der beabsichtigten Scheibengeometrie gebogen. Der Vorbiegering (7a) und der Endbiegering (7b) sind bevorzugt auf dem gleichen fahrbaren Biegering (3) angeordnet und lassen sich durch das Entfernen eines Stiftes vom Vorbiegering (7a) in den Endbiegering (7b) umwandeln. Die Scheiben werden im Zwischenbereich (C) geheizt. Die auf dem Endbiegering (7b) abgelegten Scheiben (1, 2) werden durch Wärmeeinstrahlung in der Fläche vorgebogen. Dazu wird oberhalb der Scheiben (1, 2) im Zwischenbereich (C) ein Temperaturgradient eingestellt und durch die unterschiedliche Erwärmung eine unterschiedliche Flächenbiegung ermöglicht. Die Heizvorrichtung (6) umfasst bevorzugt eine Anordnung aus einzelnen separat steuerbaren Heizkacheln. Durch die unterschiedliche Wärmeabstrahlung der Kacheln lassen sich unterschiedliche Temperaturbereiche auf den Scheiben (1, 2) realisieren. Anschließend werden die Scheiben im Endbiegebereich (D) über eine zweite Ansaugvorrichtung (15) angehoben und gegen eine bevorzugt konkave Gegenform (16) gepresst und geformt. Die Gegenform weist eine im Vergleich zur zweiten Ansaugvorrichtung (15) "inverse" Geometrie auf. Die Scheiben (1, 2) werden anschließend auf dem Endbiegering (7b) abgelegt und abgekühlt.

### Bezugszeichenliste

- (1): erste Scheibe
- (2): zweite Scheibe
- (3): fahrbarer Biegeringhalter
- (4): Ofen
- (5): (erste) Ansaugvorrichtung
- (6): Heizvorrichtung
- (7a): Vorbiegering
- (7b): Endbiegering
- (8): Gegenskelett
- (9): Abdeckung
- (10): Transportvorrichtung
- (11): Luftleitblech
- (12): Kontaktfläche
- (13): Luftstrom
- (14): Randzone
- (15): zweite Ansaugvorrichtung
- (16): Gegenform
- (17): dritte Ansaugvorrichtung
- (18): Abstand zwischen Scheibe und Luftleitblech
- (A): Vorwärmbereich
- (B): Vorbiegebereich
- (D): zweiter Biegebereich
- (C): Heizbereich
- (E): Kühlbereich

## Patentansprüche

1. Verfahren zum Biegen einer Scheibe, wobei
a. mindestens eine Scheibe (1, 2) in einen Vorbiegering (7a) mit einem fahrbaren Biegeringhalter (3) eingesetzt wird, der fahrbare Biegeringhalter (3) in einen Ofen (4) gefahren wird und die Scheibe (1, 2) auf Erweichungstemperatur erwärmt wird und auf 5 % bis 50 % der Randendbiegung vorgebogen wird,
b. die Scheibe (1, 2) über eine Ansaugvorrichtung (5) angehoben wird und über die im Vorbiegring (7a) erhaltene Biegung weiter gebogen wird, wobei während der Biegung an einer gebogenen Kontaktfläche (12) eines Gegenskeletts (8) der Ansaugvorrichtung (5) ein minimaler Abstand (18) von 3 mm bis 50 mm zwischen der Scheibe (1, 2) und einem Luftleitblech (11) einer Abdeckung (9) der Ansaugvorrichtung (5) vorliegt, die das Gegenskelett (8) umgibt,
c. die Scheibe (1, 2) über die Ansaugvorrichtung (5) in einen Endbiegering (7b) auf dem fahrbaren Biegeringhalter (3) abgelegt wird und auf Randendbiegung gebogen wird und über Wärmeeinstrahlung eine Flächenvorbiegung der Scheibe (1, 2) erfolgt,
d. die Scheibe (1, 2) über eine zweite Ansaugvorrichtung (15) aus dem Endbiegering (7b) angehoben wird, gegen eine Gegenform (16) gepresst und gebogen wird und die Scheibe (1, 2) auf dem Endbiegering (7b) abgelegt und
e. die Scheibe (1, 2) abgekühlt wird.

2. Verfahren nach Anspruch 1, wobei die Scheibe (1) über die Ansaugvorrichtung (5) auf 100 % bis 130 %, bevorzugt 105 % bis 120 % der globalen Randendbiegung gebogen wird.

3. Verfahren nach Anspruch 1 oder 2, wobei die Scheibe (1) über die erste Ansaugvorrichtung (5) mit einer lokal unterschiedlichen Randendbiegung gebogen wird.

4. Verfahren nach Anspruch 3, wobei die Scheibe (1) in der Ansaugvorrichtung (5, 15) lokal über einen Luftstrom oder einen unteren Biegering gebogen wird.

5. Verfahren nach einem der Ansprüche 1 bis 4, wobei die Scheibe (1) über einen Temperaturgradienten auf der Glasoberfläche mit maximal 0,05 K/mm bis 0,5 K/mm, bevorzugt 0,1 K/mm bis 0,2 K/mm erwärmt wird.

6. Verfahren nach einem der Ansprüche 1 bis 5, wobei die Scheibe (1) auf eine Temperatur von 500 °C bis 750 °C, bevorzugt 580 °C bis 650 °C erwärmt wird.

7. Verfahren nach einem der Ansprüche 1 bis 6, wobei die Scheibe (1) durch die Schwerkraft im Vorbiegering (7a) auf 10 % bis 30 % der lokalen Randendbiegung vorgebogen wird.

8. Verfahren nach einem der Ansprüche 1 bis 7, wobei die Ansaugvorrichtung (5) einen Ansaugdruck von 1 kg/m² bis 100 kg/m² aufbaut.

9. Verfahren nach einem der Ansprüche 1 bis 8, wobei zwei Scheiben (1, 2) gebogen werden.

10. Ofen zur Biegung von Scheiben, mindestens umfassend:
a. einen Vorwärmbereich (A) zum Vorwärmen mindestens einer Scheibe (1, 2), umfassend einen Vorbiegering (7a) auf einem fahrbaren Biegeringhalter (3),
b. einen ersten Biegebereich (B) mit einer ersten vertikal verstellbaren, gebogenen Ansaugvorrichtung (5), umfassend ein Gegenskelett (8) mit einer gebogenen Kontaktfläche (12) sowie einer das Gegenskelett (8) umgebenden Abdeckung (9) mit Luftleitblech (11) zum weiteren Biegen der vorgebogenen Scheibe (1, 2),
c. einen Heizbereich (C) zum Randendbiegen der Scheibe (1, 2) und Flächenvorbiegen der Scheibe (1, 2) durch Wärmeeinstrahlung, umfassend einen Endbiegering (7b) auf dem fahrbaren Biegeringhalter (3),
d. einen zweiten Biegebereich (D) mit einer zweiten vertikal verstellbaren, gebogenen Ansaugvorrichtung (15), umfassend ein Gegenskelett (8) mit einer gebogenen Kontaktfläche (12) sowie eine das Gegenskelett (8) umgebende Abdeckung (9) mit Luftleitblech (11), und eine horizontal verstellbare, gebogene Gegenform (16) zum weiteren Flächenbiegen der Scheibe (1, 2) durch Pressen zwischen der Kontaktfläche (12) und der Gegenform (16) und
e. einen Kühlbereich (E).

11. Ofen nach Anspruch 10, wobei im zweiten Biegebereich (D) eine dritte Ansaugvorrichtung (17) angeordnet ist.

12. Ofen nach Anspruch 10 oder 11, der eine Heizvorrichtung (6) zum Beheizen der Bereiche (A), (B), (C), (D) und (E) aufweist.

13. Ofen nach Anspruch 12, wobei die Heizvorrichtung (6) Heizstrahler, bevorzugt Infrarotstrahler umfasst.

14. Ofen nach einem der Ansprüche 10 bis 13, wobei die Heizvorrichtung (6) eine Anordnung aus einzelnen, separat steuerbaren Heizkacheln oder Heizfelder umfasst.

15. Verwendung eines Ofens nach einem der Ansprüche 10 bis 14 zur Biegung von zu laminierenden Scheiben, bevorzugt Fahrzeugwindschutzscheiben.

## Claims

1. Method for bending a pane, wherein
a. at least one pane (1, 2) is placed in a pre-bending ring (7a) with a movable bending ring holder (3), the movable bending ring holder (3) is moved into a furnace (4), and the pane (1, 2) is heated to softening temperature and pre-bent to 5 % to 50 % of the final bend of the edge,
b. the pane (1, 2) is lifted by a suction device (5) and is further bent beyond the bending obtained in the pre-bending ring (7a), wherein during the bending on a bent contact surface (12) of a counter framework (8) of the suction device (5), there is a minimum distance (18) of 3 mm to 50 mm between the pane (1, 2) and an air baffle (11) of a cover (9) of the suction device (5) that surrounds the counter framework (8),
c. the pane (1, 2) is placed by means of the suction device (5) in a final bending ring (7b) on the movable bending ring holder (3) and is bent to the final bend of the edge, and surface pre-bending of the pane (1, 2) takes place by thermal irradiation,
d. the pane (1, 2) is lifted by a second suction device (15) out of the final bending ring (7b), pressed against a counter mold (16) and bent, and the pane (1, 2) is placed on the final bending ring (7b), and
e. the pane (1, 2) is cooled.

2. Method according to claim 1, wherein the pane (1) is bent by the suction device (5) to 100 % to 130 %, preferably 105 % to 120 % of the overall final bend of the edge.

3. Method according to claim 1 or 2, wherein the pane (1) is bent by the first suction device (5) with a locally different final bend of the edge.

4. Method according to claim 3, wherein the pane (1) is bent locally in the suction device (5, 15) by a stream of air or a lower bending ring.

5. Method according to one of claims 1 through 4, wherein the pane (1) is heated by a temperature gradient on the glass surface with a maximum of 0.05 K/mm to 0.5 K/mm, preferably 0.1 K/mm to 0.2 K/mm.

6. Method according to one of claims 1 through 5, wherein the pane (1) is heated to a temperature of 500 °C to 750 °C, preferably 580 °C to 650 °C.

7. Method according to one of claims 1 through 6, wherein the pane (1) is pre-bent by gravity in the pre-bending ring (7a) to 10 % to 30 % of the local final bend of the edge.

8. Method according to one of claims 1 to 7, wherein the suction device (5) builds a suction pressure of 1 kg/m² to 100 kg/m².

9. Method according to one of claims 1 to 8, wherein two panes (1, 2) are bent.

10. Furnace for bending panes, comprising at least:
a. a preheating region (A) for preheating at least one pane (1, 2), comprising a pre-bending ring (7a) on a movable bending ring holder (3),
b. a first pre-bending region (B) with a first vertically displaceable, bent suction device (5), comprising a counter framework (8) with a bent contact surface (12) as well as a cover (9) surrounding the counter framework (8) with air baffle (11) for the further bending of the pre-bent pane (1, 2),
c. a heating region (C) for the final bending of the edge of the pane (1, 2) and surface pre-bending of the pane (1, 2) by thermal irradiation, comprising a final bending ring (7b) on the movable bending ring holder (3),
d. a second bending region (D) with a second vertically displaceable, bent suction device (15), comprising a counter framework (8) with a bent contact surface (12), as well as a cover (9) with an air baffle (11) that surrounds the counter framework (8), and a horizontally displaceable, bent counter mold (16) for the further surface bending of the pane (1, 2) by pressing between the contact surface (12) and the counter mold (16), and
e. a cooling region (E).

11. Furnace according to claim 10, wherein a third suction device (17) is disposed in the second bending region (D).

12. Furnace according to claim 10 or 11, which has a heating device (6) for heating the regions (A), (B), (C), (D), and (E).

13. Furnace according to claim 12, wherein the heating device (6) includes radiant heaters, preferably infrared radiators.

14. Furnace according to one of claims 10 through 13, wherein the heating device (6) includes an arrangement made up of individual, separately controllable heating tiles or heating fields.

15. Use of a furnace according to one of claims 10 through 14 for bending panes to be laminated, preferably motor vehicle windshields.

## Revendications

1. Procédé de cintrage d'une vitre, où
a. au moins une vitre (1, 2) est insérée dans un anneau de préflexion (7a) avec un support d'anneau de flexion (3) mobile, le support d'anneau de flexion (3) mobile est déplacé dans un four (4) et la vitre (1, 2) est chauffée à la température de trempage et est précintrée de 5% à 50% du cintrage de bord final,
b. la vitre (1, 2) est relevée au moyen d'un dispositif d'aspiration (5) et est cintrée davantage par le cintrage obtenu lors du précintrage (7a), où, au cours du cintrage, sur une surface de contact (12) courbée d'un contre-squelette (8) du dispositif d'aspiration (5), un écart (18) minimal de 3 mm à 50 mm existe entre la vitre (1, 2) et un déflecteur d'air (11) d'une couverture (9) du dispositif d'aspiration (5), qui entoure le contre-squelette (8),
c. la vitre (1, 2) est placée par le dispositif d'aspiration (5) sur le support d'anneau de flexion (3) mobile dans un anneau de flexion final (7b) et est cintré au cintrage de bord final et une préflexion de la surface de la vitre (1, 2) par rayonnement thermique se produit,
d. la vitre (1, 2) est relevée au moyen d'un deuxième dispositif d'aspiration (15) en dehors de l'anneau de flexion final (7b), est appuyée et est cintrée contre une contre-forme (16) et la vitre (1, 2) est déposée sur l'anneau de flexion final (7b) et
e. la vitre (1, 2) est refroidie.

2. Procédé selon la revendication 1, où la vitre (1) est cintrée sur le dispositif d'aspiration (5) de 100% à 130%, de préférence de 105% à 120% du cintrage de bord final.

3. Procédé selon la revendication 1 ou 2, où la vitre (1) est cintrée sur le premier dispositif d'aspiration (5) par un cintrage de bord final différent localement.

4. Procédé selon la revendication 3, où la vitre (1) est cintrée localement dans le dispositif d'aspiration (5, 15) par un flux d'air ou un anneau de flexion inférieur.

5. Procédé selon l'une des revendications 1 à 4, où la vitre (1) à l'aide d'un gradient de température à la surface de verre est réchauffée de 0,05 K/mm à 0,5 K/mm maximale, de préférence de 0,1 K/mm à 0,2 K/mm

6. Procédé selon l'une des revendications 1 à 5, où la vitre (1) est chauffée à une température de 500° C à 750 °C, de préférence de 580° C à 650 °C.

7. Procédé selon l'une des revendications 1 à 6, où la vitre (1) est précintrée par la gravité dans l'anneau de précintrage (7a) de 10% à 30% du cintrage de bord final local.

8. Procédés selon l'une des revendications 1 à 7, où le dispositif d'aspiration (5) établit une pression d'entrée de 1 kg/m² à 100 kg/m².

9. Procédé selon l'une des revendications 1 à 8, où deux vitres (1, 2) sont cintrées.

10. Four pour le cintrage des vitres, comprenant au moins :
a. une zone de préchauffe (A), pour le préchauffe d'au moins une vitre (1, 2), comprenant un anneau de préflexion (7a) sur un support d'anneau de flexion (3) mobile,
b. une première zone (B) de flexion avec un premier dispositif d'aspiration (5) verticalement réglable et courbé, comprenant un contre-squelette (8) avec une surface de contact (12) courbée, ainsi qu'un couvercle (9) qui entoure le contre-squelette (8) avec un déflecteur d'air (11) pour cintrer davantage la vitre précintrée (1, 2).
c. une zone de chauffe (C), pour le cintrage de bord final de la vitre (1, 2) et I et le précintrage de surface de la vitre (1, 2) par rayonnement thermique, comprenant un anneau de flexion finale (7b) sur le support d'anneau de flexion (3) mobile,
d. une deuxième zone de cintrage (D) avec un deuxième dispositif d'aspiration (15) verticalement réglable et courbé, 15), comprenant un contre-squelette (8) une surface de contact (12) courbée, ainsi qu'un couvercle (9) qui entoure le contre-squelette (8) avec un déflecteur d'air (11) et une contre-forme (16) horizontalement réglable et courbée, pour cintrer davantage la vitre (1, 2) en appuyant entre la surface de contact (12) et la contre-forme (16) et
e. une zone de refroidissement (E).

11. Four selon la revendication 10, où un troisième dispositif d'aspiration (17) est disposé dans la deuxième zone de cintrage (D).

12. Four selon la revendication 10 ou 11, qui présente un dispositif de chauffage (6) pour chauffer les zones (A), (B), (C), (D) et (E).

13. Four selon la revendication 12 où le dispositif de chauffage (6), comprend un chauffage à rayonnement, de préférence un chauffage à rayonnement infrarouge.

14. Four selon l'une des revendications 10 à 13, où le dispositif de chauffage (6) comprend un agencement de carreaux ou de panneaux chauffants individuels, réglables séparément.

15. Utilisation d'un four selon l'une des revendications 10 et 14 pour le cintrage de vitres à laminer, de préférence des pare-brises de véhicule.
